# EUROPEAN PATENT APPLICATION

(11) **EP 4 759 530 A1**
(43) Date of publication of application: **17.06.2026**
(21) Application number: 25205796.3
(22) Date of filing: 30.09.2025
(51) Int. Cl.: B29D 30/28, B29D 30/30, B29D 30/06

(54) **GREEN TIRE FORMING METHOD AND GREEN APPARATUS**

(30) Priority: 08.11.2024 JP 2024196280
(71) Applicant: Sumitomo Rubber Industries, Ltd., Kobe-shi, Hyogo 651-0072 (JP)
(72) Inventor: SAKAMOTO, MASAYUKI, Kobe-shi, Hyogo, 651-0072 (JP); HASHIMOTO, YUTO, Kobe-shi, Hyogo, 651-0072 (JP); SOYDAS, ORHAN, Cank r (TR)
(74) Representative: Manitz Finsterwald Patent- und Rechtsanwaltspartnerschaft mbB

(57) **Abstract**

A green tire forming method comprises: a step S1 of preparing a strip of rubber sheet G1 elongated in a first direction D1 and having a constant width L0; a step S2 of cutting the strip of rubber sheet in a second direction D2 intersects the first direction D1 to form a rectangular or parallelogram-shaped rubber sheet piece G2; a step S3 of winding the rubber sheet piece G2 around a cylindrical body 13a so that the cut edges E1 of the rubber sheet piece G2 become parallel to the circumferential direction of the cylindrical body 13a; and a step S4 of joining edges E2 of the rubber sheet piece G2 to form an annular body G3.

## Description

### Technical field

The present invention relates to a method and an apparatus for forming a green tire.

### Background art

Heretofore, there have been known various apparatuses for forming a green tire comprising an inner liner rubber (see Patent Document 1, for example).

### Prior art document

### Patent Documents

Patent Document 1: Japanese Patent Application Publication No. 2021-109348

### Summary of the invention

### Problems to be solved by the invention

In the apparatus disclosed in Patent Document 1, a rubber sheet having a constant width is supplied as an inner liner rubber.
The rubber sheet is cut in parallel to the tire axial direction (or sheet widthwise direction) immediately before being wound around a cylindrical body, so as to have a length in the winding direction according to the outer diameter of the cylindrical body which corresponds to the diameter of the wheel rim for the tire.

Therefore, when manufacturing tires having different profiles, it is necessary to change the rubber sheet to that having a different width. Thus, it is necessary to prepare a large number of rubber sheets having different widths depending on the tire profiles, which causes complication in the manufacturing site.

Further, when the winding-start end and the winding-stop end of the wound rubber sheet are overlap-joined, there is possibility of causing defects at the overlap-joint portion such as a step difference, namely, a difference in level in the radial direction which deteriorates the uniformity performance of the tire, and cavities of entrapped air.

The present invention was devised in view of the above-described circumstances, and a primary objective of the present invention is to provide a method and an apparatus for forming a green tire which can reduce or eliminate the complication in the manufacturing site.

### Means for solving the problems

According to one aspect of the present invention, a method for forming a green tire, comprises:
a rubber sheet preparation step of preparing a strip of rubber sheet which is elongated in a first direction and has a constant width in the orthogonal direction thereto;
a cutting step of cutting the strip of rubber sheet in a second direction intersecting the first direction to make a rectangular or parallelogram-shaped rubber sheet piece;
a winding step of winding the rubber sheet piece around a cylindrical body such that a pair of the cut edges of the rubber sheet piece, which have been cut in the second direction, become parallel to the circumferential direction of the cylindrical body; and
a joining step of joining edges of the rubber sheet piece(s) wound on the cylindrical body to form an annular body of the rubber sheet piece(s).

According to another aspect of the present invention, an apparatus for forming a green tire comprises:
a rubber sheet supply unit which supplies a strip of rubber sheet which is elongated in a first direction and has a constant width in the orthogonal direction thereto;
a cutting unit which cuts the strip of rubber sheet in a second direction intersecting the first direction to make a rectangular or parallelogram-shaped rubber sheet piece;
a winding unit which winds the rubber sheet piece around a cylindrical body such that a pair of the cut edges of the rubber sheet piece, which have been cut in the second direction, become parallel to the circumferential direction of the cylindrical body; and
a joining unit which joins edges of the rubber sheet piece(s) wound on the cylindrical body to form an annular body of the rubber sheet piece(s).

### Effects of the Invention

According to the present invention, since the method and apparatus for forming a green tire are configured as described above, it becomes possible to reduce or eliminate the complication in the manufacturing site, while improving the defective rate.

### Brief description of the drawings

FIG. 1 is a flowchart showing the steps of a green tire forming method as an embodiment of the present invention.
FIG. 2 is a block diagram showing a green tire forming apparatus as an embodiment of the present invention, for use in the green tire forming method shown in FIG. 1.
FIG. 3 is a perspective view for explaining the rubber sheet preparation step of FIG. 1 and schematically showing the rubber sheet supply unit of FIG. 2.
FIG. 4 is a perspective view for explaining the cutting step of FIG. 1 and schematically showing the cutting unit of FIG. 2.
FIG. 5 is a perspective view for explaining the cutting step and schematically showing the cutting unit which are different from those shown in FIG. 4.
FIG. 6 is a perspective view for explaining the winding step of FIG. 1 and schematically showing the winding unit of FIG. 2.
FIG. 7 is a perspective view for explaining the winding step and schematically showing the winding unit which are different from those shown in FIG. 6.
FIG. 8 is a perspective view for explaining the joining step of FIG. 1 and schematically showing the joining unit of FIG. 2.
FIG. 9 is a perspective view for explaining the joining step and schematically showing the joining unit which are different form those shown in FIG. 8.
FIG. 10 is a perspective view for explaining a specific example of the rubber sheet preparation step and schematically showing a specific example of the rubber sheet supply unit.
FIG. 11 is a perspective view for explaining another example of the rubber sheet preparation step and schematically showing another example of the rubber sheet supply unit.
FIG. 12 is a side view for explaining the winding step viewed from the axial direction of the cylindrical body.
FIG. 13 is a side view for explaining a modified example of the winding step.
FIG. 14 is a plan view of a strip of rubber sheet for explaining the shape of a rubber sheet piece when the cutting angle θ, which is the angle of the second direction relative to the first direction, is changed.
FIG. 15 is a flowchart showing the steps of a modified example of the green tire forming method.
FIG. 16 is a flowchart showing the steps of another modified example of the green tire forming method.
FIG. 17 is a flowchart showing the steps of yet another modified example of the green tire forming method.
FIG. 18 is a plan view showing a composite body of a rubber sheet piece and a carcass ply lapped thereon.
FIG. 19 is a side view foe explaining the winding step of the green tire forming method of FIG. 17.

### Detailed description of the Invention

Hereinafter, embodiments of the present invention will be described in detail in conjunction with accompanying drawings.
It is noted that the drawings may contain exaggerations and dimensional ratios different from the actual ratios in order to aid the understanding of the present invention. For the different embodiments, the same reference numerals are given to the same or common parts, and redundant explanations are omitted. The specific configurations illustrated in the embodiments and the drawings are for understanding the present invention, and the present invention is not limited to such specific configurations.

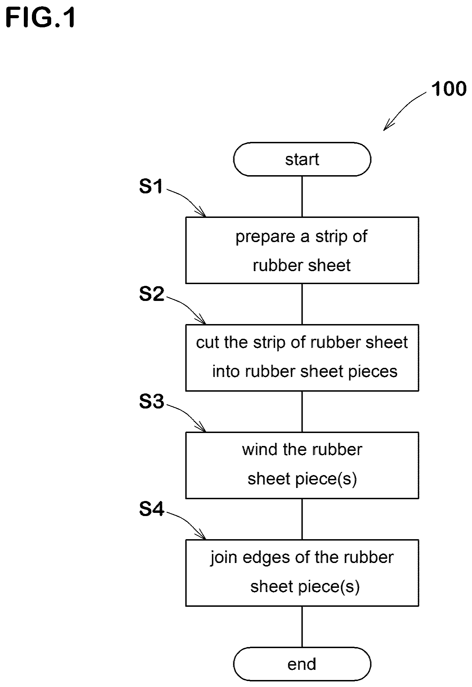

FIG. 1 is a flowchart of a green tire forming method 100 as an embodiment of the present invention.

The green tire forming method 100 is for manufacturing a green tire in a toroidal shape.
The green tire forming method 100 comprises a rubber sheet preparation step S1, a cutting step S2, a winding step S3, and a joining step S4.

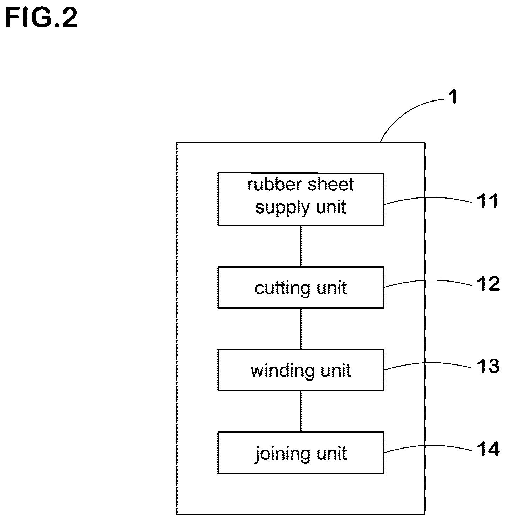

FIG. 2 shows a green tire forming apparatus 1 for forming a green tire by carrying out the green tire forming method 100.
The green tire forming apparatus 1 comprises a rubber sheet supply unit 11, a cutting unit 12, a winding unit 13, and a joining unit 14.

The rubber sheet preparation step S1 is carried out by the rubber sheet supply unit 11.
The cutting step S2 is carried out by the cutting unit 12.
The winding step S3 is carried out by the winding unit 13.
The joining step S4 is carried out by the joining unit 14.

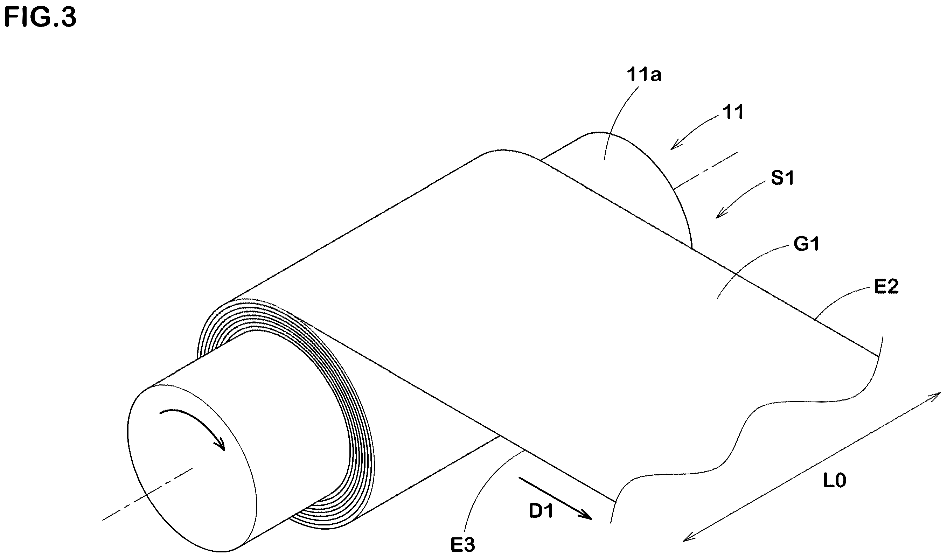

FIG. 3 is for explaining the rubber sheet preparation step S1, and schematically shows the rubber sheet supply unit 11.
The rubber sheet preparation step S1 is a step of preparing a strip of rubber sheet G1. The strip of rubber sheet G1 prepared in this rubber sheet preparation step S1 is elongated in a first direction D1 and has a constant width L0. The width L0 is measured in a direction perpendicular to the first direction D1.

The strip of rubber sheet G1 in this example is made of a rubber compound having air impermeability suitable for an inner liner rubber of a pneumatic tire.
The strip of rubber sheet G1 can be made of a rubber compound suitable for a rubber component other than the inner liner rubber.

The strip of rubber sheet G1 in this example is prepared in a state wound around a roll 11a.
Such rubber sheet G1 strip can be taken out in the first direction D1 from the roll and supplied to the cutting unit 12.
The supply of the strip of rubber sheet G1 can be made by using an applicator such as a conveyor (not shown).

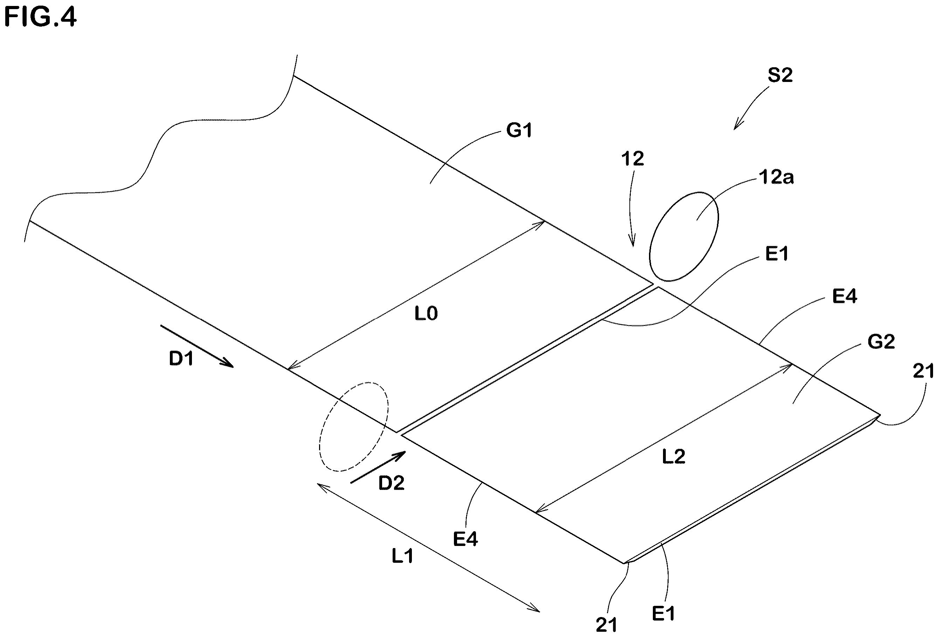

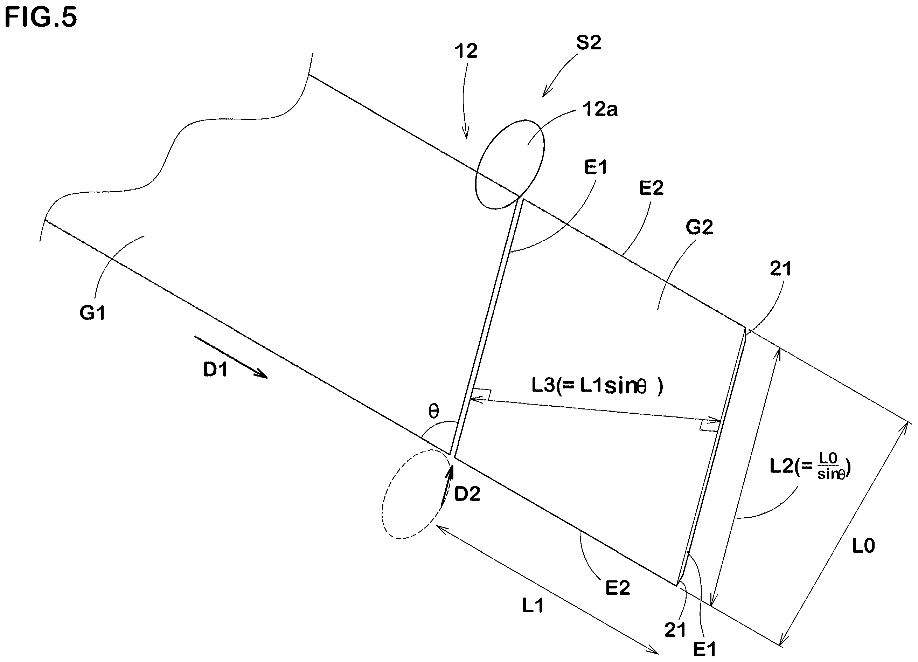

FIGS. 4 and 5 are for explaining the cutting step S2, and schematically show the cutting unit 12.
The cutting step S2 is a step of cutting the strip of rubber sheet G1 in a second direction D2 intersecting the first direction D1.
The second direction D2 can be a direction intersecting the first direction D1 at a right angle as shown in FIG. 4 and a direction diagonally intersecting the first direction D1 at an angle θ less than 90 degrees as shown in FIG. 5.

For cutting the strip of rubber sheet G1, a cutter 12a such as a rotary cutter and a push-cut cutter can be used.
Thus, the cutting unit 12 comprises such cutter 12a for cutting the strip of rubber sheet G1.

In the cutting step S2, the strip of rubber sheet G1 is cut linearly multiple times, while pulling it out in the first direction D1.
Between the successive cuttings, the strip of rubber sheet G1 is fed by a length L1 in the first direction D1.
Thereby, there is formed a rubber sheet piece G2 which has, at the front and rear ends in the first direction D1, a pair of parallel edges E1 formed by cutting.
Thus, the rubber sheet piece G2 may have a rectangular shape (including a square) or a parallelogram shape (including a rhombus) depending on the length L1 and the cutting angle θ.
The shortest distance L3 between the edges E1 is a function of the length L1 by which the strip of rubber sheet G1 is fed in the first direction D1 between the cuttings, i.e., the cutting interval L1.

As shown in FIG. 4, when the strip of rubber sheet G1 is cut in the second direction D2 orthogonal to the first direction D1, the rubber sheet piece G2 having a rectangular shape is formed. Thus, the length L2 of the rubber sheet piece G2 in the second direction D2 becomes equal to the width L0 of the strip of rubber sheet G1, and the distance L3 between the edges E1 becomes equal to the cutting interval L1.

As shown in FIG. 5, when the strip of rubber sheet G1 is cut in the second direction D2 diagonally intersecting the first direction D1, the rubber sheet piece G2 having a parallelogram shape is formed.
When the angle of the second direction D2 with respect to the first direction D1 (i.e., the cutting angle of the strip of rubber sheet G1) is θ, the length L2 of the rubber sheet piece G2 in the second direction D2 is L0 / sinθ, and
the distance L3 between the edges E1 is L1 * sin θ.

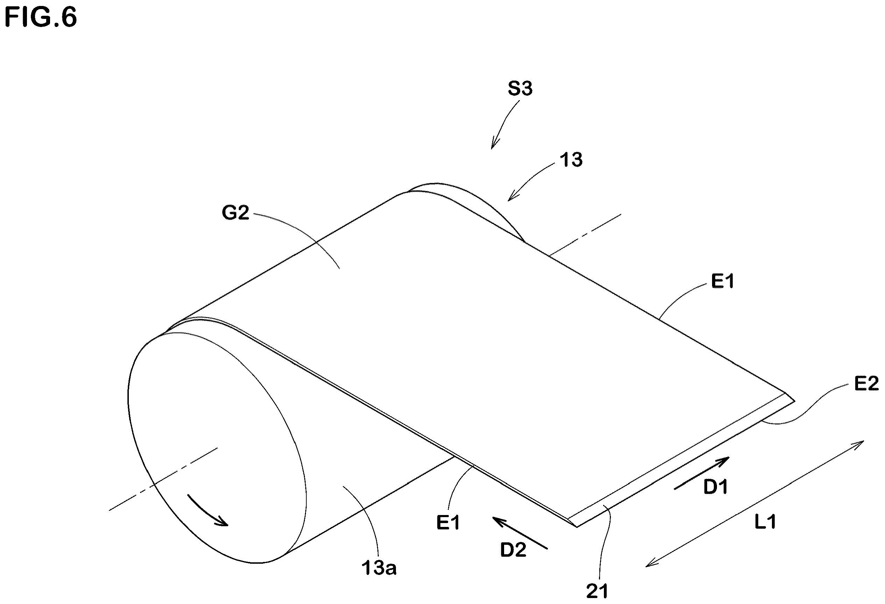

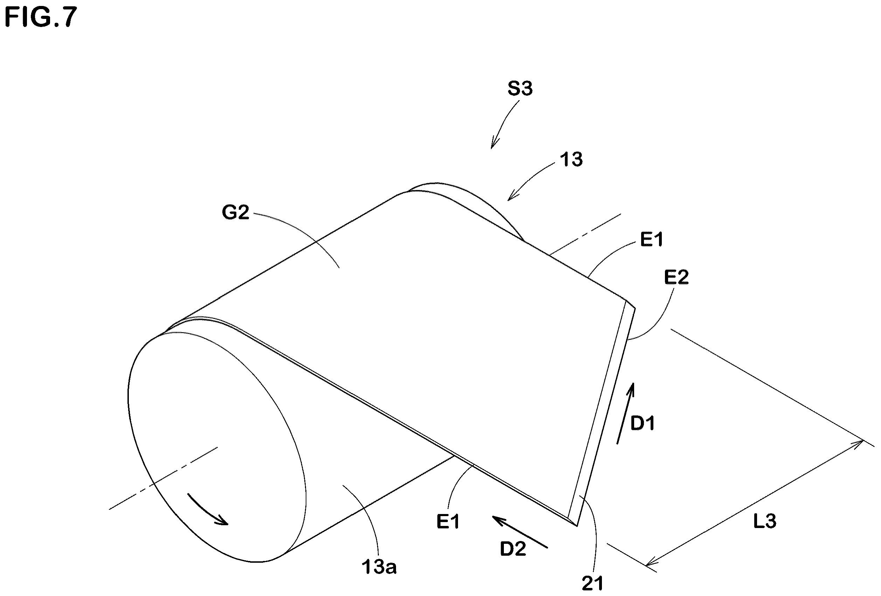

FIGS. 6 and 7 are for explaining the winding step S3, and schematically show the winding unit 13.
The winding step S3 is a step of winding the rubber sheet piece G2 around a cylindrical body 13a.
The winding unit 13 comprises the cylindrical body 13a so-called a forming drum.
The cylindrical body 13a is supported rotatably about its support axis.
The supply of the rubber sheet piece G2 to the cylindrical body 13a can be made by using an applicator such as a conveyor (not shown).

In the winding step S3, the rubber sheet piece G2 is wound around the rotating cylindrical body 13a while being supplied in a direction parallel to the edge E1 (namely, the second direction).
Thereby, the rubber sheet piece G2 is wound such that the edges E1 are along the circumferential direction of the cylindrical body 13a.

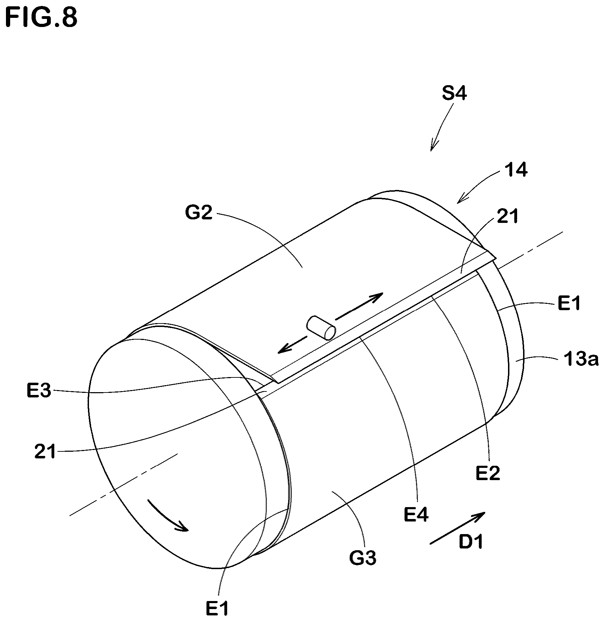

FIG. 6 shows an example in which the rubber sheet piece G2 cut in the second direction D2 orthogonal to the first direction D1 in the cutting step S2 of FIG. 4, is supplied to the cylindrical body 13a and wound therearound.
In this example, a winding-start edge portion E3 and a winding-stop edge portion E4 (shown in FIG. 8) in winding of the rubber sheet piece G2 are arranged parallel to the axial direction of the cylindrical body 13a.

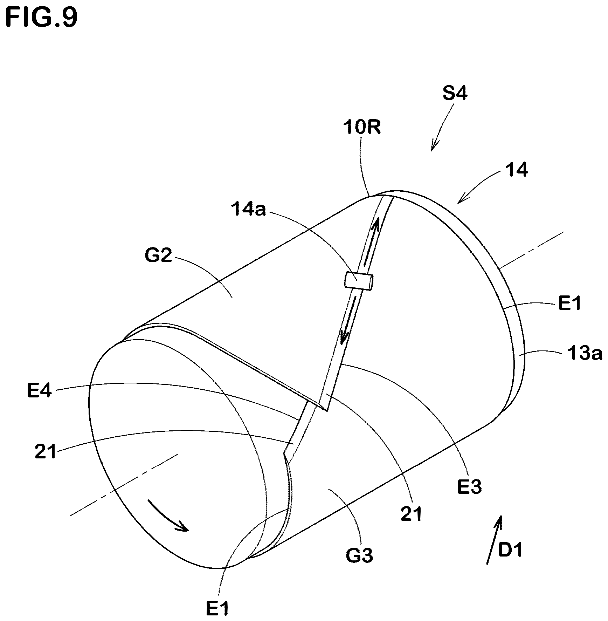

FIG. 7 shows an example in which the rubber sheet piece G2 cut in the second direction D2 diagonally intersecting the first direction D1 in the cutting step S2 of FIG. 5, is supplied to the cylindrical body 13a and wound therearound.
In this example, a winding-start edge portion E3 and a winding-stop edge portion E4 (shown in FIG. 9) in winding of the rubber sheet piece G2 are arranged obliquely with respect to the axial direction of the cylindrical body 13a.

FIGS. 8 and 9 are for explaining the joining step S4 and schematically show the joining unit 14.
The joining step S4 is a step of joining the winding-start edge portion E3 and the winding-stop edge portion E4 of the rubber sheet piece G2.
For that purpose, a joint roller 14a or the like can be used.
In this example, a joint roller 14a is used.
The joining unit 14 in this example comprises such joint roller 14a.

The joint roller 14a presses the winding-stop edge portion E4 against the winding-start edge portion E3 while moving in a direction parallel to the winding-start edge portion E3 and the winding-stop edge portion E4 of the rubber sheet piece G2. On the cylindrical body 13a, the winding-start edge portion E3 and the winding-stop edge portion E4 are jointed, and thereby, an annular body G3 which constitutes a part of the green tire is formed.

FIG. 8 shows an example in which the rubber sheet piece G2 cut in the second direction D2 orthogonal to the first direction D1 in the cutting step S2 of FIG. 4, is joined on the cylindrical body 13a.
In this example, a winding-start edge portion E3 and a winding-stop edge portion E4 in winding of the rubber sheet piece G2 are arranged parallel to the axial direction of the cylindrical body 13a.

FIG. 9 shows an example in which the rubber sheet piece G2 cut in the second direction D2 diagonally intersecting the first direction D1 in the cutting step S2 of FIG. 5, is joined on the cylindrical body 13a.
In this example, a winding-start edge portion E3 and a winding-stop edge portion E4 in winding of the rubber sheet piece G2 are arranged diagonally with respect to the axial direction of the cylindrical body 13a.

Since the green tire forming method 100 and green tire forming apparatus 1 according to the present invention are designed as described above, it is possible to form plural types of rubber sheet pieces G2 having different sizes and shapes from one type of rubber sheet G1 strip by changing the cutting interval L1, namely, the length L1 for feeding the strip of rubber sheet G1 in the first direction D1, and the cutting angle, namely, angle θ of the second direction D2 with respect to the first direction D1. Such plural types of rubber sheet pieces G2 can be used for green tires of multiple sizes, therefore, the complication in the manufacturing site can be reduced or eliminated.

As shown in FIGS. 4 and 5, preferably, each of both edges E2 in the width direction, of the strip of rubber sheet G1 is provided with a tapered portion 21 in which the thickness is gradually decreased toward the outside in the width direction.

As shown in FIGS. 6, 7, 8, and 9, such both edges E2 become the winding-start edge portion E3 and the winding-stop edge portion E4 in the winding of the rubber sheet piece G2.

As shown in FIGS. 8 and 9, in the joining step S4, the tapered portions 21 of the rubber sheet piece G2 are overlapped each other and joined together.
Thereby, variations in the thickness of the rubber sheet piece G2 at the joint position is suppressed, which improves the uniformity of the weight in the circumferential direction, and the uniformity performance of the finished tire is improved.
Further, difference in level at the joint position can be reduced, and defects such as air trap can be reduced.
Therefore, the defective rate of the green tires is reduced, and eventually that of the finished tires is reduced. And the complication in the manufacturing site can be further reduced.
Furthermore, unnecessary mass increase at the joint position is prevented, which may contribute to making the finished tire lighter.

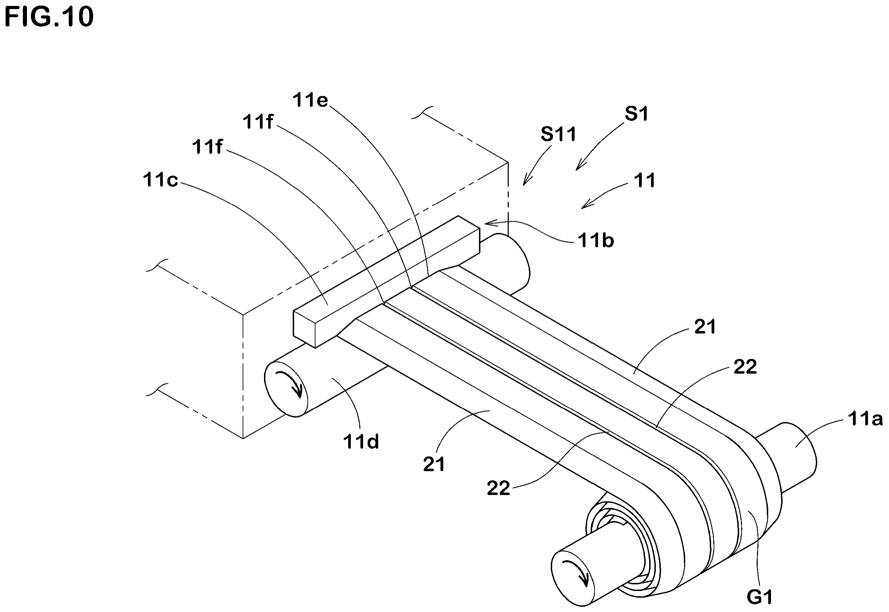

FIG. 10 is for explaining an example of the rubber sheet preparation step S1 and schematically shows an example of the rubber sheet supply unit 11.
The rubber sheet preparation step S1 in this example further comprises an extrusion step S11.
And the rubber sheet supply unit 11 in this example further comprises an extrusion unit 11b.

The extrusion step S11 is a step of extruding the strip of rubber sheet G1 with the same cross section along the first direction.
The extrusion step S11 is carried out by the extrusion unit 11b.
The extrusion unit 11b in this example comprises a screw (not shown) for kneading and extruding the rubber compound, a die plate 11c disposed at an end on the downstream side in the extrusion direction, of the extrusion unit 11b, and a roller 11d disposed so as to face the die plate 11c.

The die plate 11c is provided with an outlet 11e having an opening shape corresponding to the cross sectional shape of the strip of rubber sheet G1 to be extruded. The outlet 11e in this example is for extruding the strip of rubber sheet G1 which, as described above, has the tapered portions 21 at both edges E2 in the width direction.

The strip of rubber sheet G1 extruded from the die plate 11c is wound around the roll 11a and transferred to the rubber sheet supply unit 11 shown in FIG. 3.
The first direction D1 of the strip of rubber sheet G1 corresponds to the extrusion direction of the strip of rubber sheet G1.
It may be also possible to directly supply the strip of rubber sheet G1 extruded from the die plate 11c to the cutting unit 12 without being wound around the roll 11a.

According to the extrusion step S11 in this example, it is possible to easily and continuously prepare and supply the strip of rubber sheet G1 with the same cross sectional shape to the cutting unit 12.

The die plate 11c in this example may be provided with a convex portion 11f for forming a groove 22 on the surface of the strip of rubber sheet G1 as shown in FIG. 10.
The convex portion 11f projects from a surface of the outlet 11e which faces and contacts the said surface of the strip of rubber sheet G1.
By the convex portion 11f, the grooves 22 continuous in the first direction D1 is formed on the surface of the strip of rubber sheet G1 while being extruded from the outlet 11e.

The grooves 22 facilitate the discharge of air trapped inside the green tire during the green tire forming process to the outside.
That is, the groove 22 functions as a passage for air discharged to the outside during the green tire forming process and vulcanization process.

Further, the die plate 11c may be provided with a recess (not shown) instead of or in addition to the convex portion 11f.
Such recess forms a protrusion continuous in the first direction D1 on the surface of the strip of rubber sheet G1.
Similar to the grooves 22, areas adjacent to the protrusion may function as a passage for air discharged to the outside during the green tire forming process and vulcanization process.

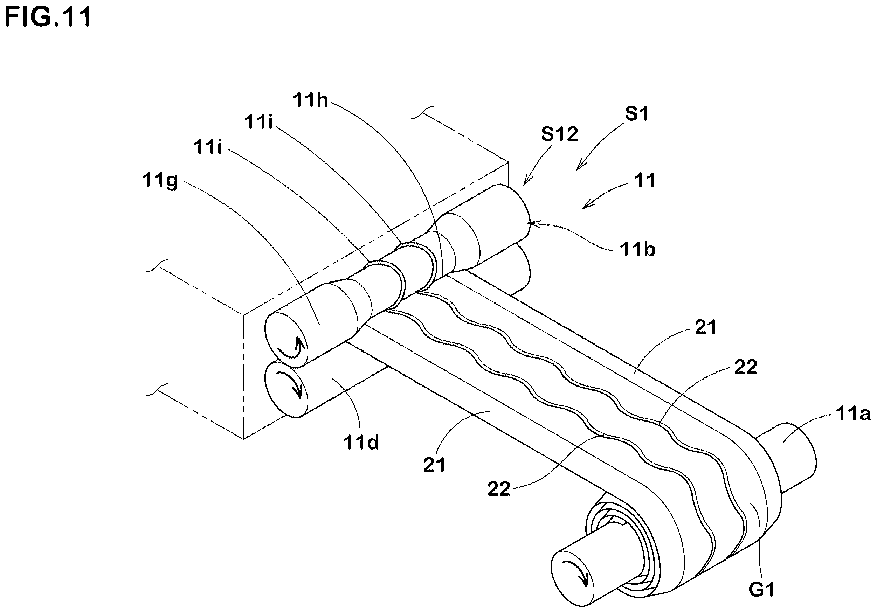

In the rubber sheet preparation step S1, instead of the extrusion step S11 shown in FIG. 10, a calendering step S12 may be employed as shown in FIG. 11. In the calendering step S12, instead of the die plate 11c, there is used a roller 11g having an equivalent outlet 11h.
The roller 11g is provided with a convex portion 11i which is continuous in the circumferential direction.
The convex portion 11i in this example meanders in the axial direction, in other words, extends in a zigzag form.
Such convex portion 11i forms a groove 22 on the surface of the strip of rubber sheet G1, which meanders and continues in the first direction D1.
The roller 11g may be provided with a recess (not shown) instead of or in addition to the convex portion 11i.

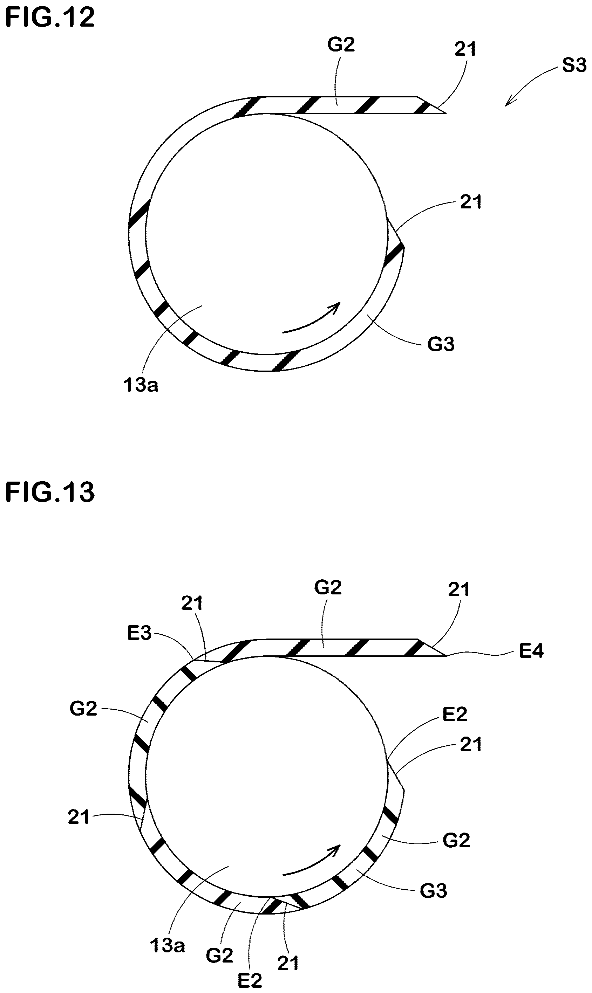

FIG. 12 shows an example of the winding step S3 viewed from the axial direction of the cylindrical body 13a.
In the winding step S3 in this example, one rubber sheet piece G2 is wound around the cylindrical body 13a, and the winding-stop edge portion E4 and the winding-start edge portion E3 are jointed.
Such winding step can be made by setting the length L2 of the rubber sheet piece G2 in the second direction D2 along which the rubber sheet piece G2 has been cut in the cutting step S2, as large as the circumference of the cylindrical body 13a.
According to such winding step S3, the production efficiency of green tires may be easily increased.

FIG. 13 shows another example of the winding step S3 viewed from the axial direction of the cylindrical body 13a.
In the winding step S3 in this example, a plurality of rubber sheet pieces G2 are wound in series over the entire circumference of the cylindrical body 13a.
Such rubber sheet piece G2 can be made by setting the length L2 of the rubber sheet piece G2 in the second direction D2 along which in the cutting step S2 is cut, to a value obtained by dividing the circumference of the cylindrical body 13a by an integer corresponding to the number of the rubber sheet pieces G2 to be wound.
According to such winding step S3, the rubber sheet supply unit 11 and, by extension, the green tire forming apparatus 1 may be made compact.

In the winding step S3 in the example shown in FIG. 13, four rubber sheet pieces G2 are wound or applied around the cylindrical body 13a such that
the winding-stop edge portion E4 of the first applied rubber sheet piece G2 is joined to the winding-start edge portion E3 of the second applied rubber sheet piece G2;
the winding-stop edge portion E4 of the second applied rubber sheet piece G2 is joined to the winding-start edge portion E3 of the third applied rubber sheet piece G2;
the winding-stop edge portion E4 of the third applied rubber sheet piece G2 is joined to the winding-start edge portion E3 of the fourth applied rubber sheet piece G2; and
the winding-stop edge portion E4 of the fourth applied rubber sheet piece G2 is joined to the winding-start edge portion E3 of the first applied rubber sheet piece G2.

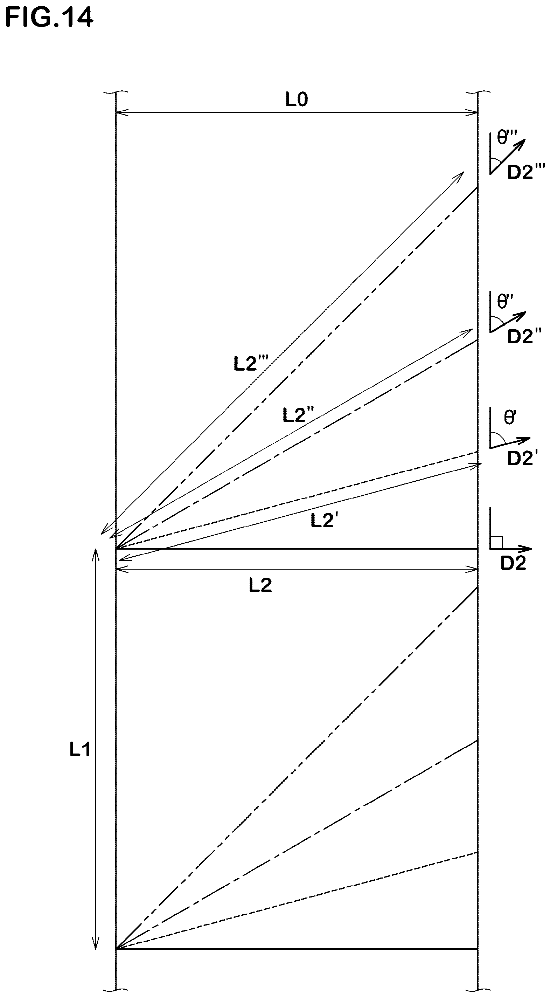

FIG. 14 shows the shapes of the rubber sheet pieces G2 when the cutting angle θ, which is the angle of the second direction D2 with respect to the first direction D1, is changed, wherein
the rubber sheet piece G2 when the cutting angle θ is 90 degrees is represented by a solid line;
the rubber sheet piece G2 when the cutting angle θ is θ' is represented by a broken line;
the rubber sheet piece G2 when the cutting angle θ is θ" is represented by a dashed line; and
the rubber sheet piece G2 when the cutting angle θ is θ‴ is represented by a chain double-dashed line.

As already mentioned, when the cutting angle θ is 90 degrees, a rectangular rubber sheet piece G2 is formed.
When the cutting angle θ is θ', θ", or θ‴ which is smaller than 90 degrees, a parallelogram-shaped rubber sheet piece G2 is formed.
As the cutting angle θ becomes smaller, the lengths L2', L2" and L2‴ of the rubber sheet pieces G2 in the second direction D2', D2" and D2‴ become larger.
Therefore, by changing the cutting angle θ, the lengths L2, L2', L2", L2‴ of the rubber sheet pieces G2 in the second direction can be adjusted according to the circumference of the cylindrical body 13a.

In general, the circumference of the cylindrical body 13a is set according to the rim diameter of the finished tire.
By changing the cutting angle θ, it is possible to form, from one kind of the strip of rubber sheet G1, rubber sheet pieces G2 of multiple sizes which can be applied to finished tires of multiple sizes having different rim diameters.

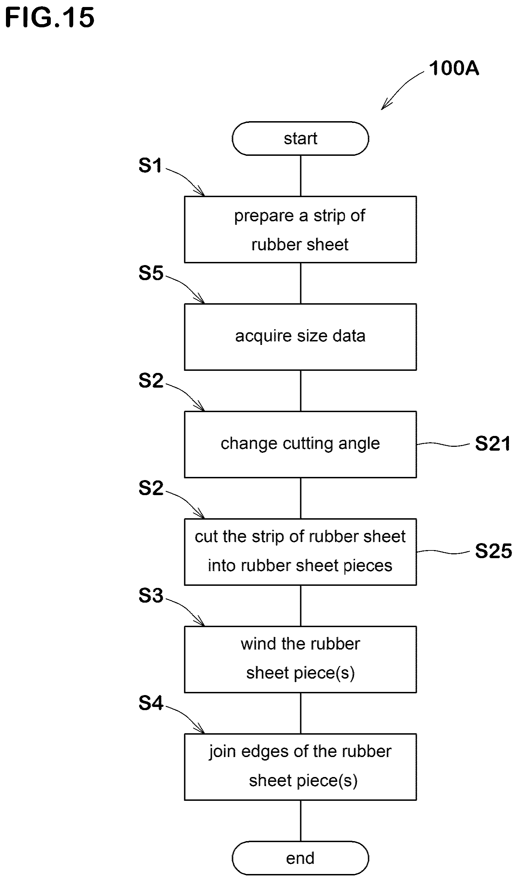

FIG. 15 is a flowchart of a green tire forming method 100A, which is a modification of the green tire forming method 100.
For anything not described below regarding the green tire building method 100B, what has been described above regarding the green tire building method 100 may be applied.

The green tire forming method 100A differs from the above-described green tire forming method 100 in that it further comprises a size data acquisition step S5. The size data acquisition step S5 is a step of acquiring data regarding the size of the green tire to be formed.
The data includes data corresponding to the rim diameter of the finished tire.
Further, the data may include data regarding the circumference of the cylindrical body 13a.

The size data acquisition step S5 is carried out, for example, by a computer device associated with the green tire forming method 100.
The computer device is connected by wire or wirelessly to a database in which data regarding sizes of the green tires are stored.
The database may be constructed in the storage means of the computer device itself. The computer device obtains data regarding sizes of the green tire to be formed by accessing the database.

The method employed in the size data acquisition step S5 is not limited to the one described above.
For example, it may be also possible to employ a method in which data regarding sizes of the green tire to be formed is set to the green tire forming method by an operator.

The size data acquisition step S5 is carried out prior to the cutting step S2. Therefore, the size data acquisition step S5 is carried out before or simultaneously or immediately after the rubber sheet preparation step S1.

In the cutting step S2 of the green tire forming method 100A, prior to cutting the strip of rubber sheet G1, a cutting angle changing step S21 can be carried out as needed.
That is, the cutting step S2 includes a cutting angle changing step S21. After the cutting angle changing step S21, a step S25 of cutting the strip of rubber sheet G1 is carried out.

In the cutting angle changing step S21, the cutting angle θ corresponding to the angle of the second direction D2 with respect to the first direction D1, is determined by the CPU of the computer device based on the data regarding the rim diameter of the finished tire acquired in the size data acquisition step S5.
Then, the CPU of the computer device transmits the information regarding the determined cutting angle θ to the cutting unit 12, and thereby, the cutting angle θ is changed.

The cutting angle θ can be changed by changing the angle of the supply direction of the strip of rubber sheet G1 (first direction D1) with respect to the cutting direction by the cutter 12a (second direction D2).
Thereby, it becomes possible to form green tires of multiple sizes with different rim diameters without changing the strip of rubber sheet G1, while the positional relationship between the cutter 12a and the cylindrical body 13a is kept constant. In addition, it can eliminate the need to adjust the angle of the cut-out rubber sheet piece.

In the cutting angle changing step S21, the cutting angle θ is changed when the cylindrical body 13a used in the winding step S3 is changed. That is, when forming green tires having different inside diameters (corresponding rim diameters of the finished tires) than previously formed green tires, the cutting angle θ is changed.

FIG. 15 is a flowchart of a green tire forming method 100B, which is another modification of the green tire forming method 100.
For anything not described below regarding the green tire building method 100B, what has been described above regarding the green tire building methods 100 and 100A may be applied.

The green tire forming method 100B comprises the size data acquisition step S5 similarly to the above-described green tire forming method 100.
In the green tire forming method 100B, the data acquired in the size data acquisition step S5 further includes data regarding the profile of the finished tire, in particular, the inner surface length.

Here, the inner surface length means the length measured along the inner surface of the tire from the bead toe to bead toe in a meridian cross-section of the tire.

When the rubber sheet piece G2 is used as the inner liner rubber of a pneumatic tire, the width of the rubber sheet piece G2 applied around the cylindrical body 13a is usually set according to the inner surface length of the finished tire.

In the cutting step S2, when the cutting direction is the second direction D2 perpendicular to the first direction D1 as shown in FIGS. 4 and 6, the cutting interval L1 corresponds to the width of the rubber sheet piece G2 wound around the cylindrical body 13a (the length in the axial direction of the cylindrical body 13a).

In the cutting step S2, when the cutting direction is the second direction D2 diagonally intersecting the first direction D1 as shown in FIGS. 5 and 7, the distance L3 between the cut edges E1 corresponds to the width of the rubber sheet piece G2 wound around the cylindrical body 13a. At this time, the distance L3 between the cut edges E1 depends on the cutting interval L1.

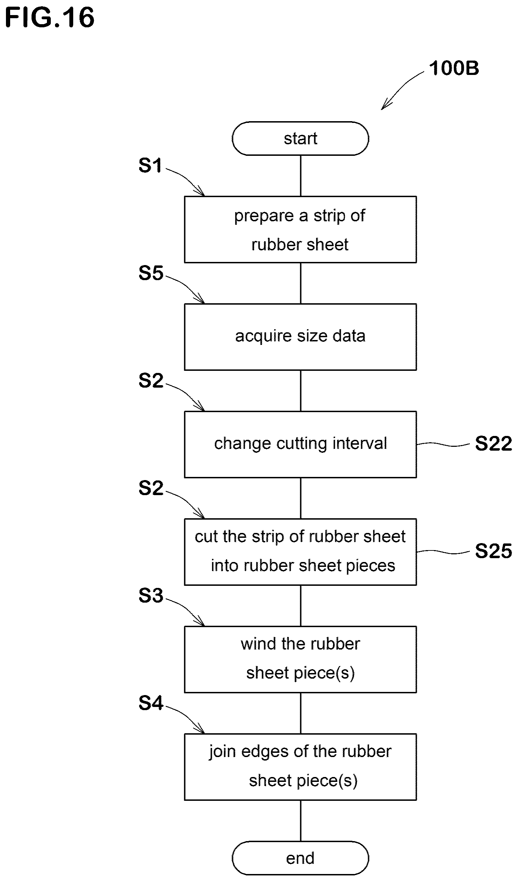

Therefore, in the cutting step S2 of the green tire forming method 100B, as shown in FIG. 16, a cutting interval changing step S22 for changing the cutting interval L1 is carried put prior to cutting the strip of rubber sheet G1.
That is, the cutting step S2 includes the cutting interval changing step S22.

In the cutting interval changing step S22, the cutting interval L1 of the rubber sheet pieces G2 is determined and changed based on the data regarding the inner surface length of the finished tire acquired in the size data acquisition step S5.
The cutting interval L1 is changed by changing the amount of feed of the strip of rubber sheet G1 in the first direction D1 between the cutting and subsequent cutting.

In the cutting interval changing step S22, the cutting interval L1 is changed according to the inner surface length of the finished tire, and thereafter, the step S25 for cutting the strip of rubber sheet G1 is carried out.
Thus, rubber sheet pieces G2 of different sizes to be applied to a plurality of sizes of finished tires with different profiles can be formed from one kind of the strip of rubber sheet G1.
As a matter of course, the green tire forming method 100B may comprise the above-described cutting angle changing step S21.

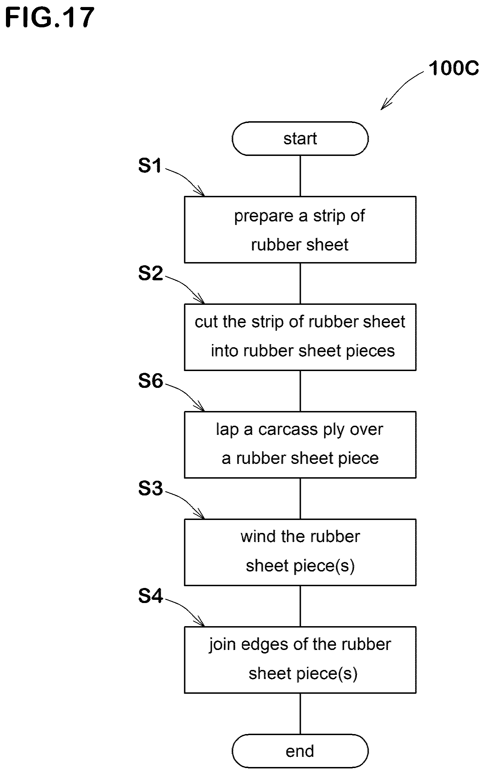

FIG. 17 is a flowchart of a green tire forming method 100C, which is yet another modification of the green tire forming method 100.
For anything not described below regarding the green tire building method 100B, what has been described above regarding the green tire building methods 100, 100A and 100B may be applied.

The green tire forming method 100C differs from the above-described green tire forming method 100 in that it further comprises a lamination step S6.
In the lamination step S6, in order to form a composite body 4, a carcass ply 3 is lapped over the rubber sheet piece G2 formed in the cutting step S2 as shown in FIG. 17.

In the green tire forming method 100C, as the composite body 4 is wound, the rubber sheet piece G2 and the carcass ply 3 are wound at the same time, so the productivity of the green tire is improved.
As a matter of course, the green tire forming method 100C may comprise the above-described cutting angle changing step S21 and/or cutting interval changing step S22.

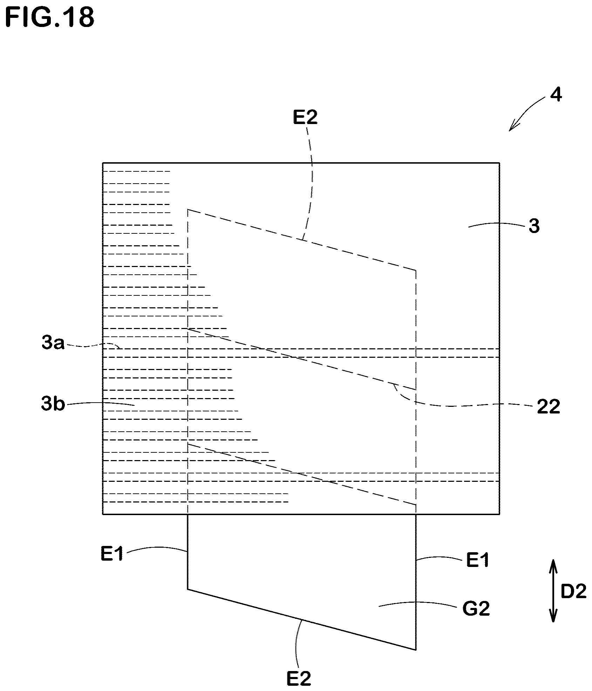

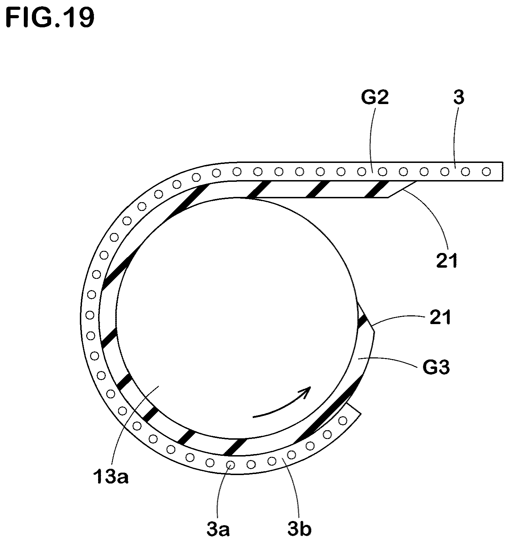

FIG. 18 shows the composite body 4 in which the carcass ply 3 is lapped over the rubber sheet piece G2.
The carcass ply 3 is a ply constituting the carcass of the tire, and is formed by covering an array of parallel carcass cords 3a with a topping rubber 3b as shown in FIG. 19.

When being lapped over the rubber sheet piece G2, the position of the carcass ply 3 is shifted in the second direction D2 relative to the rubber sheet piece G2. This makes it easier to join the edges of the rubber sheet piece G2.

In the lamination step S6, the carcass ply 3 is lapped over such that the carcass cords 3a become perpendicular to the second direction D2.

In FIG. 18, the rubber sheet piece G2 is cut in the second direction D2 which intersects diagonally with the first direction D1 (see FIGS. 5 and 7). And the surface of the rubber sheet piece G2, preferably provided with the grooves 22 (see FIGS. 10 and 11).

When the carcass ply 3 is lapped over so that the carcass cords 3a are orthogonal to the second direction D2, the grooves 22 diagonally intersect with the carcass cords 3a.
Thereby, air trapped between the carcass ply 3 and the rubber sheet piece G2 can be easily discharged to the outside through the grooves 22, and defects such as occurrence of air trap can be prevented.

FIG. 19 is for explaining the winding step S3 of the green tire forming method 100C.
In the winding step S3, the composite body 4 which is the rubber sheet piece G2 and the carcass ply 3 lapped thereon is wound around the cylindrical body 13a and jointed. At this time, since the carcass ply 3 on the rubber sheet piece G2 is shifted in the second direction D2 from the rubber sheet piece G2, the edge portions of the rubber sheet piece G2 can be easily jointed with each other by winding the carcass ply 3. Thereby, the productivity of the green tire can be improved.

While detailed description has been made of preferable embodiments of the present invention, the present invention can be embodied in various forms without being limited to the illustrated embodiments.

### Description of the reference signs

1: green tire forming apparatus
3: carcass ply
11: rubber sheet supply unit
12: cutting unit
13: winding unit
13a: cylindrical body
14: joining unit
21: tapered portion
22: groove
100: green tire forming method
100A: green tire forming method
100B: green tire forming method
100C: green tire forming method
D1: first direction
D2: second direction
E1: cut edge
E2: edge
G1: rubber sheet strip
G2: rubber sheet piece
G3: annular body
L0: width
L1: cutting interval
S1: rubber sheet preparation step
S11: extrusion step
S2: cutting step
S21: cutting angle changing step
S22: cutting interval changing step
S3: winding step
S4: joining step
S5: size data acquisition step
S6: lamination step
θ: cutting angle

## Claims

1. A method for forming a green tire, comprising:
a rubber sheet preparation step of preparing a strip of rubber sheet which is elongated in a first direction and has a constant width in the orthogonal direction thereto;
a cutting step of cutting the strip of rubber sheet in a second direction intersecting the first direction to make a rectangular or parallelogram-shaped rubber sheet piece;
a winding step of winding the rubber sheet piece around a cylindrical body such that a pair of the cut edges of the rubber sheet piece, which have been cut in the second direction, become parallel to the circumferential direction of the cylindrical body; and
a joining step of joining edges of the rubber sheet piece(s) wound on the cylindrical body to form an annular body of the rubber sheet piece(s).

2. The green tire forming method according to claim 1, wherein
the strip of rubber sheet is provided, at both edges in the width direction, with tapered portions in which the thickness of the rubber sheet is gradually decreased toward respective outer sides in the width direction, so that the rubber sheet piece comprises the tapered portions, and
in the joining step, the tapered portions are joined by overlapping each other.

3. The green tire forming method according to claim 1 or 2, wherein
the rubber sheet preparation step includes an extrusion step of extruding the strip of rubber sheet so as to have the same cross section along the extruding direction corresponding to the first direction.

4. The green tire forming method according to claim 3, wherein
the extrusion step includes a step of forming at least one of a groove and a protrusion continuous in the first direction on a surface of the strip of rubber sheet.

5. The green tire forming method according to claim 1, 2, 3 or 4, wherein
in the winding step, only one rubber sheet piece is wound around the entire circumference of the cylindrical body.

6. The green tire forming method according to claim 1, 2, 3 or 4, wherein
in the winding step, a plurality of the rubber sheet pieces are wound in series around the entire circumference of the cylindrical body.

7. The green tire forming method according to any one of claims 1 to 6, which comprises a size data acquisition step of acquiring data regarding sizes of the green tire to be formed, prior to the cutting step, and
the cutting step includes
a cutting angle changing step of changing a cutting angle which corresponds to the angle of the second direction with respect to the first direction based on the data acquired in the size data acquisition step, or alternatively
a cutting interval changing step of changing a cutting interval of the strip of rubber sheet based on the data acquired in the size data acquisition step.

8. The green tire forming method according to any one of claims 1 to 6, which comprises a size data acquisition step of acquiring data regarding sizes of the green tire to be formed, prior to the cutting step, and
the cutting step includes
a cutting angle changing step of changing a cutting angle which corresponds to the angle of the second direction with respect to the first direction based on the data acquired in the size data acquisition step, and
a cutting interval changing step of changing a cutting interval of the strip of rubber sheet based on the data acquired in the size data acquisition step

9. The green tire forming method according to any one of claims 1 to 8, wherein
the green tire comprising an inner liner rubber, and
the rubber sheet piece constitutes the inner liner rubber.

10. The green tire forming method according to any one of claims 1 to 9, which comprises a lamination step of lapping a carcass ply over the rubber sheet piece formed in the cutting step.

11. A green tire forming apparatus comprising:
a rubber sheet supply unit which supplies a strip of rubber sheet which is elongated in a first direction and has a constant width in the orthogonal direction thereto;
a cutting unit which cuts the strip of rubber sheet in a second direction intersecting the first direction to make a rectangular or parallelogram-shaped rubber sheet piece;
a winding unit which winds the rubber sheet piece around a cylindrical body such that a pair of the cut edges of the rubber sheet piece, which have been cut in the second direction, become parallel to the circumferential direction of the cylindrical body; and
a joining unit which joins edges of the rubber sheet piece(s) wound on the cylindrical body to form an annular body of the rubber sheet piece(s).
